# EUROPÄISCHE PATENTSCHRIFT

(11) **EP 2 552 723 B1**
(45) Veröffentlichungstag und Bekanntmachung des Hinweises auf die Patenterteilung: **16.10.2019**
(21) Anmeldenummer: 11703900.8
(22) Anmeldetag: 17.02.2011
(51) Int. Cl.: B60K 15/04, B67D 3/00, F04F 10/00, F02M 37/00, B67D 7/32, F01N 3/20

(54) **VORRICHTUNG ZUR VERMEIDUNG DES FLUTENS EINES FÖRDER- ODER DOSIERSYSTEMS**
SYSTEM FOR PREVENTION OF FLOODING OF A PUMPING OR DOSING SYSTEM
SYSTÈME POUR ÈVITER LE NOYAGE D'UN SYSTÈME DE POMPAGE OU DOSAGE

(30) Priorität: 26.03.2010 DE 102010003310
(43) Veröffentlichungstag der Anmeldung: 06.02.2013
(73) Patentinhaber: Robert Bosch GmbH, 70442 Stuttgart (DE)
(72) Erfinder: DIENERS, Bruno, Hans, 71263 Weil der Stadt (DE); BRAUN, Jochen, 71296 Heimsheim (DE); WAGNER, Andreas, 70563 Stuttgart (DE)
(86) Internationale Anmeldenummer: PCT/EP2011/052323
(87) Internationale Veröffentlichungsnummer: WO 2011/117030

(56) Entgegenhaltungen:
- WO-A1-03/016687
- WO-A1-2006/136306
- WO-A1-2007/141312
- DE-A1-102007 027 413
- DE-A1-102008 055 013
- JP-A- H10 194 036
- US-A- 4 951 699
- US-A- 5 970 999
- US-B1- 6 227 262

## Beschreibung

### Stand der Technik

DE 103 37 572 A1 bezieht sich auf einen Vorratstank. Der Vorratstank dient der Aufnahme eines flüssigen Mediums, insbesondere eines Betriebs- und/oder Hilfsstoffs, zum Betrieb einer Brennkraftmaschine und/oder dieser zugeordneten bzw. nachgeschalteten Einrichtung. Der Vorratstank umfasst eine Entnahmeöffnung in Nähe eines Tankbodens sowie eine Belüftungsöffnung in einem oberen Bereich. Der Tank umfasst des Weiteren eine Heizeinrichtung und weist eine sich in Richtung auf den oberen Bereich kegelstumpfförmig verengende Tankgeometrie auf. Der Tank gemäß DE 103 37 572 A1 ist insbesondere mittels des Blasformverfahrens gefertigt und dient als Speichertank für Harnstoff bzw. für eine Lösung aus Harnstoff und Wasser.

WO 2006/136306A1 bezieht sich auf ein Reduktionsmittelversorgungssystem für einen Abgasreinigungskatalysator und eine Heizeinrichtung hierfür. Das Reduktionsmittelversorgungssystem umfasst einen Reduktionsmitteltank zur Aufnahme von Reduktionsmittel, eine Verbindungsleitung, um Reduktionsmittel aus dem Reduktionsmitteltank zu einem Abgasreinigungskatalysator zu befördern und eine Pumpe. Diese pumpt Reduktionsmittel durch die Verbindungsleitung von dem Reduktionsmitteltank zu dem Katalysator. Es ist vorgesehen, dass zumindest ein Abschnitt der Verbindungsleitung als ein korrosionsbeständiges Metallrohr ausgebildet ist, das mit elektrischen Anschlüssen versehen wird, um zum Auftauen von Reduktionsmitteln einen elektrischen Heizstrom durch die Verbindungsleitung zu leiten. Des Weiteren wird eine Heizeinrichtung offenbart für ein derartiges Versorgungssystem, die ein korrosionsbeständiges Metallrohr umfasst zum Eintauchen in die Lösung, welches als Ansaugrohr an eine Pumpe zum Fördern der aufgetauten Lösung anschließbar ist, und an dem elektrische Anschlüsse angebracht sind, um einen Heizstrom durch das Metallrohr zu leiten, der das Metallrohr zum Auftauen der Lösung erwärmt.

Bei Systemen, die zur Stickstoffreduzierung des Abgases von insbesondere selbstzündenden Brennkraftmaschinen eingesetzt werden, wird die selektive katalytische Reaktionstechnik (SCR) eingesetzt und hat sich bewährt. Ein SCR-System beinhaltet im Wesentlichen ein vorzugsweise druckgesteuertes Förder- und Dosiersystem, welches im Wesentlichen einen Tank, eine Fördereinheit, so z.B. eine Pumpe, eine Druckleitung sowie eine Dosiereinheit und die zur Steuerung bzw. Regelung notwendige Sensorik umfasst. Des Weiteren umfasst ein SCR-System Heizeinrichtungen, um auch bei tieferen Außentemperaturen, insbesondere unterhalb einer Temperatur von -11 °C, das SCR-System betriebsfähig zu halten.

Um eine möglichst hohe Standardisierung der Komponenten eines SCR-Systems zu erreichen und während des Betriebs zu gewährleisten und gleichzeitig eine hohe Flexibilität bezüglich der Tanks, insbesondere deren Geometrie für die Automobilhersteller zu bieten, ist es von Vorteil, die Komponenten und insbesondere die Komponenten, die für den Tankeinbau in Frage kommen und die im Fördersystem eingesetzt werden, im unteren Bereich des Vorratstanks anzuordnen. Dadurch wird eine so genannte "Standard Source Unit" gebildet.

### Offenbarung der Erfindung

Erfindungsgemäß wird vorgeschlagen, eine Leitung so zu gestalten, dass ein Fluten der Komponenten des SCR-Systems mit einem Betriebs- bzw. Hilfsstoff wie z.B. Harnstoff (AdBlue) oder einer Harnstoff-Wasser-Lösung (HWL) wirksam vermieden wird.

Durch die erfindungsgemäß vorgeschlagene Lösung wird sichergestellt, dass kein Betriebs-Hilfsstoff wie z.B. AdBlue, sei es Harnstoff oder sei es eine Harnstoff-Wasser-Lösung, vom Vorratstank über das Förder- und/oder Dosiersystem in das Abgassystem der Verbrennungskraftmaschine leckt und das Abgassystem bzw. insbesondere einen in diesem aufgenommenen Katalysator im Extremfalle unbrauchbar macht. Durch die erfindungsgemäß vorgeschlagene Lösung wird des Weiteren vermieden, dass Komponenten des Förder- und/oder Dosiersystems durch Fluten mit dem Betriebs- bzw. Hilfsstoff unbrauchbar werden und nachfolgende Komponenten durch Einfrieren des Betriebs-/Hilfsstoffes bei Außentemperaturen unter -11 °C im Extremfalle unbrauchbar werden. Des Weiteren kann durch die erfindungsgemäß vorgeschlagene Lösung ein Einfrieren des Betriebs-/Hilfsstoffes in den genannten Komponenten des SCR-Systems vermieden werden und dadurch die Problematik des Eisdruckes ausgeräumt werden.

Ein weiterer Vorteil der erfindungsgemäß vorgeschlagenen Lösung ist darin zu erblicken, dass diese zur Belüftung des SCR-Systems im Falle des Einfrierens und eines sich daran anschließenden Dosierbetriebs eingesetzt werden kann.

Die erfindungsgemäß vorgeschlagene Lösung umfasst im Wesentlichen die Ausbildung einer Leitung mit einem Siphonbogen bzw. die Verlegung dieser Leitung derart, dass ein Siphon entsteht, der ein Fluten von Komponenten des SCR-Systems mit dem Betriebs- bzw. Hilfsstoff wirksam verhindert. Ein Siphonbogen wird in der Saugleitung angebracht. Der in der Saugleitung ausgebildete Siphon ist so angeordnet, dass die geodätische Höhe des oberen Leitungspunktes des Siphons in ausreichender Höhe oberhalb des maximalen Tankfüllstandes des Vorratstanks liegt. Dabei ist eine Neigung des Fahrzeugs beim Abstellen und insbesondere die Auslegung der Tankentlüftung insbesondere unter Berücksichtigung des Temperatureinflusses zu berücksichtigen. Gegebenenfalls ist der Siphonbogen in Bezug auf dessen geodätische Höhe oberhalb des maximalen Tankfüllstandes so hoch auszulegen, dass eine ausreichende Sicherheit bezüglich im Vorratstank insbesondere bei tiefen Außentemperaturen auftretender Eisbildung sichergestellt ist. Der Siphonbogen in der Saugleitung ist so auszubilden, dass die Flüssigkeitssäule des Betriebs-Hilfsstoffes innerhalb der Saugleitung vom oder zum Vorratstank mit Sicherheit abreißt, d.h. mit Sicherheit unterbrochen wird.

Die erfindungsgemäß vorgeschlagene Lösung ermöglicht für den Fall, dass der Siphontank intern oder zumindest teilweise tankintern ausgelegt ist, über den Siphon auch das Problem der Tankentlüftung für den Fall eines gefrorenen Mediums, welches im Vorratstank bevorratet wird, zu lösen. Der gefrorene Tankinhalt des Vorratstanks wird durch die im Vorratstank vorgesehene Heizung im unteren Bereich teilweise aufgetaut, so dass nach einer bestimmten Zeit flüssiges Medium, so z.B. Harnstoff oder eine Harnstoff-Wasser-Lösung zur Verfügung steht und gefördert bzw. dosiert werden kann. Die dosierte Harnstoff- bzw. Harnstoff-Wasser-Lösung wird über die Tankentlüftung wieder ausgeglichen, da sich ansonsten ein Unterdruck einstellte, der den weiteren Betrieb des Förder- bzw. Dosiersystems nicht ermöglichen würde, da der Tank sich aufgrund des zu herrschenden Unterdruckes verformen könnte oder die Saugleistung des Förderaggregates nicht mehr ausreichend ist.

Ist der Tankinhalt des Vorratstanks jedoch zum größten Teil gefroren und wird durch das Eis entlang der Tankwand abgedichtet, so kann kein Druckausgleich über die Tankentlüftung, die sich oben im Tankdeckel befindet, stattfinden. Durch eine insbesondere beheizt ausgebildete Siphonleitung im Inneren des Tanks kann um die Leitung ein Spalt geschaffen werden, d.h. ein partielles Anlösen des vereisten Tankinhaltes erfolgen, über den der Druckausgleich stattfinden kann. Eine Entlüftung des Tankbereiches, in dem die Absaugstelle liegt, lässt sich dadurch erreichen, dass eine außenliegend in Bezug auf den Tank angeordnete Leitung, ungeachtet, ob mit Siphonbogen im Saugleitungsabschnitt oder im Druckleitungsabschnitt, direkt eng an der Tankwand angebracht wird. Sicherzustellen ist in diesem Falle, dass das Material, aus dem diese außenliegende Leitung gefertigt wird, einen ausreichenden Wärmeleitkoeffizienten aufweist, dass diese Leitung beheizt wird. In diesem Falle kann durch die Tankwand hindurch eine ausreichende Wärmezufuhr eingebracht werden, so dass zumindest eine ausreichende Kapillare bzw. ein Durchgang von Kavität, d.h. ein Absaugen durch die Saugleitung zum entlüfteten Tankbereich möglich ist.

In der erfindungsgemäß vorgeschlagenen Lösung wird der Siphonbogen in einer Saugleitung ausgebildet, die tankintern verläuft. Um dem oben geschilderten Problem des Vereisens entgegenzuwirken, wird die Saugleitung, in der der Siphonbogen ausgebildet ist, beheizbar ausgeführt. Das Arbeitsmedium, d.h. Harnstoff bzw. eine Harnstoff-Wasser-Lösung, wird durch die Fördereinheit über einen Tankfilter über die Saugleitung samt Siphonbogen angesaugt und in eine Druckleitung gefördert. Beim Rücksaugen wird die Flüssigkeit aus der Druckleitung durch die Fördereinheit in die Saugleitung über den darin ausgebildeten Siphonbogen und den Filter wieder in den Vorratstank zurückgefördert. Die Förderung erfolgt so lange, bis der Siphon bis zu dessen oberen geodätischen Punkt ausreichend entleert ist und ein Abreißen der Flüssigkeitssäule sicher gewährleistet ist.

Für den Fall, dass der Tankinhalt des Vorratstanks gefroren ist, d.h. in diesem Eis vorliegt, kann über die beheizt ausgebildete Siphonleitung erreicht werden, dass ein Druckausgleich über den Luftspalt zwischen der Siphonleitung und dem gefrorenen Tankinhalt während des Dosierens entsteht.

In einem weiteren nicht erfindungsgemäßen Beispiel, ist der Siphonbogen ebenfalls in der Saugleitung ausgebildet, diese verläuft jedoch tankextern, d.h. außerhalb des die Harnstoff-Wasser-Lösung aufnehmenden Vorratstanks.

Der Siphonbogen wird gemäß dieser Beispiel ebenfalls in der Saugleitung angebracht und wird tankextern verlegt. Die Saugleitung ist ebenfalls beheizbar ausgelegt, um im Falle des Einfrierens bzw.

Durchfrierens des im Vorratstank bevorrateten Mediums einen Druckausgleich - wie oben geschildert- darstellen zu können. Das im Vorratstank bevorratete Medium, so z.B. Harnstoff-Wasser-Lösung, wird durch eine Fördereinheit über den Tankfilter und dann über die Saugleitung, in der der Siphonbogen ausgebildet ist, angesaugt und in die Druckleitung gefördert. Beim Rücksaugen der Flüssigkeit wird diese aus der Druckleitung durch die Fördereinheit in die Saugleitung über den in dieser ausgebildeten Siphonbogen und den Filter wieder zurück in den Vorratstank gefördert. Die Förderung erfolgt auch gemäß dieser Beispiel so lange, bis der Siphonbogen bis zum oberen geodätischen Punkt ausreichend entleert ist und auch in diesem Falle ein Abreißen der Flüssigkeitssäule in der Saugleitung gewährleistet ist.

In einem weiteren nicht erfindungsgemäßen Beispiel wird der Siphonbogen ebenfalls in der Saugleitung ausgebildet, die jedoch tankintern und tankextern verlaufend ausgebildet sein kann.

Der in der Saugleitung ausgebildete Siphonbogen wird ausgehend vom Tankfilter innerhalb des Vorratstanks zu dessen Oberseite hin verlegt, tritt im Tankdeckel aus und wird tankextern zur Fördereinheit geführt. Erfindungsgemäß ist die Saugleitung beheizbar. Das im Vorratstank bevorratete Medium, so z.B. Harnstoff oder eine Harnstoff-Wasser-Lösung, wird durch die Fördereinheit über den Tankfilter, über die Saugleitung inklusive Siphonbogen angesaugt und anschließend in die Druckleitung gefördert. Beim Rücksaugen der Flüssigkeit wird diese aus der Druckleitung durch die Fördereinheit in die Saugleitung über den in dieser ausgebildeten Siphonbogen und den Filter wieder in den Vorratstank zurückgefördert. Auch erfindugsgemäß erfolgt die Förderung so lange, bis der Siphonbogen bis zum oberen geodätischen Punkt ausreichend entleert ist und sichergestellt ist, dass die in der Saugleitung ausgebildete Flüssigkeitssäule abgerissen ist.

Für den Fall, dass der Inhalt des Vorratstanks gefroren ist, kann durch die ebenfalls beheizt ausgebildete Siphonleitung ein ausreichender Druckausgleich über den Luftspalt zwischen dem Außenmantel der Saugleitung und dem gefrorenen Tankinhalt des Vorratstanks während des Dosierens gewährleistet werden.

Mit der vorstehend diskutierten, erfindungsgemäß vorgeschlagenen Lösung kann eine kritische Dichtstelle, die im Tankboden entsteht, vermieden werden, wodurch diese Erfindung eine Maßnahme zur Robustheitssteigerung über die Lebensdauer eines SCR-Systems gesehen, darstellt.

Die nicht erfindungsgemäße Durchführung der Saugleitung außerhalb des Vorratstanks erfolgt durch den Tankdeckel, d.h. durch die Oberseite des den Vorratstank verschließenden Tankdeckels. Die Durchführung kann gleichzeitig als Tankentlüftung des Vorratstanks dienen. Um die Neigung eines Fahrzeuges im Abstellfall zu berücksichtigen, ist eine Durchführung der Saugleitung im Tankdeckel möglichst zentrisch, d.h. in der Mitte desselben, anzustreben.

In einem weiteren nicht erfindungsgemäßen Beispiel wird der Siphonbogen in der Druckleitung ausgebildet, die extern des Vorratstanks verlaufend ausgeführt ist.

Gemäß dieser erfindungsgemäß vorgeschlagenen Lösung wird die Druckleitung beheizt ausgebildet, um der Vereisungsproblematik der im Vorratstank bevorrateten Harnstoff-Wasser-Lösung zu begegnen. Diese wird durch eine Fördereinheit über den Tankfilter, über die Saugleitung angesaugt und in die Druckleitung gefördert. Je nach konstruktiver Anbindung des Filters kann auch auf die Saugleitung, welche ein separates Bauteil darstellt, verzichtet werden. Beim Rücksaugen gemäß einem Beispiel wird die Flüssigkeit aus der Druckleitung, in der der Siphonbogen ausgebildet ist, durch die Fördereinheit in die Saugleitung und den Filter wieder in den Vorratstank zurückgefördert. Es ist sicherzustellen, dass die Förderung so lange erfolgt, bis der Siphonbogen in der Druckleitung bis zum oberen geodätischen Punkt ausreichend entleert ist und sichergestellt ist, dass die in der Druckleitung vorliegende Flüssigkeitssäule abgerissen ist.

Gemäß eines nicht erfindungsgemäßen Beispiels können die Fördereinheit sowie Teile der Druckleitung mit dem im Vorratstank bevorrateten Arbeitsmedium, so z.B. Harnstoff oder eine Harnstoff-Wasser-Lösung (HWL), geflutet werden. Dies wiederum bedeutet, dass die Fördereinheit und die Druckleitung eisdruckfest ausgeführt werden müssen, um der Eisbildung widerstehen zu können, die sich bei Außentemperaturen von unterhalb von -11 °C einstellt.

### Kurze Beschreibung der Zeichnungen

Anhand der Zeichnung wird die Erfindung nachstehend eingehender beschrieben.

Es zeigt:
- Figur 1: eine erste Ausführungsvariante eines Siphonbogens, ausgebildet in einer Saugleitung eines Förderaggregates mit tankinternem Leitungsverlauf,
- Figur 2: zeigt ein nicht erfindungsgemäßes Beispiel eines Siphonbogens in einer Saugleitung, wobei die Saugleitung extern des Vorratstanks verläuft,
- Figur 3: zeigt ein weiteres nicht erfindungsgemäßes Beispiel des Siphonbogens in der Saugleitung, wobei ein Saugleitungsabschnitt tankintern und ein weiterer, zweiter Saugleitungsabschnitt tankextern verläuft, und
- Figur 4: eine Druckleitung auf der Druckseite einer Fördereinheit einer Druckleitung.

### Ausführungsformen

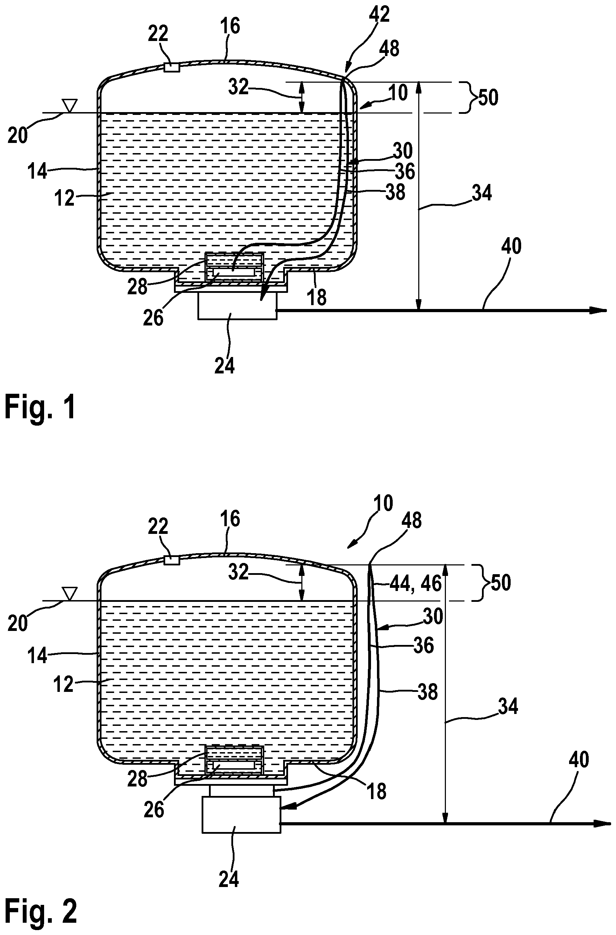

Der Darstellung gemäß Figur 1 ist eine Ausführungsvariante der erfindungsgemäß vorgeschlagenen Lösung zu entnehmen, bei der ein Siphonbogen in einer Saugleitung mit tankinternem Verlauf ausgebildet ist.

Ein Vorratstank 10 bevorratet ein Arbeitsmedium 12. Bei dem Arbeitsmedium handelt es sich z.B. um Harnstoff oder um eine Harnstoff/Wasser-Lösung, die gefrierfähig ist und die zur Reduktion des NOx in dem Abgas einer Verbrennungskraftmaschine im Abgastrakt beigemischt wird. Der Vorratstank 10 ist durch eine Tankwand 14 begrenzt und durch einen Tankdeckel 16 verschlossen. Der Vorratstank 10 umfasst einen Tankboden 18, in welchen ein Filter 26 sowie ein bevorzugt elektrisch beheizbares Heizelement 28 eingelassen ist. Des Weiteren befindet sich unterhalb des Tankbodens 18 des Vorratstanks 10, der das Arbeitsmedium 12 aufnimmt, eine Fördereinheit 24, bei der es sich um eine Pumpe handelt. Ein maximaler Füllstand, bis zu dem das Arbeitsmedium 12 im Vorratstank 10 bevorratet wird, ist durch Bezugszeichen 20 bezeichnet. Das Arbeitsmedium 12 wird auf der Saugseite der Fördereinheit 24 durch eine Saugleitung 30 angesaugt.

Gemäß der in Figur 1 dargestellten Ausführungsvariante der erfindungsgemäß vorgeschlagenen Lösung umfasst die Saugleitung 30 einen ersten Saugleitungsabschnitt 36 sowie einen zweiten Saugleitungsabschnitt 38. In der Saugleitung 30 ist zwischen dem ersten Saugleitungsabschnitt 36 und dem zweiten Saugleitungsabschnitt 38 ein Siphonbogen 48 ausgebildet, der um eine Höhe ΔH, vergleiche Bezugszeichen 32 in der Darstellung gemäß Figur 1, oberhalb des maximalen Füllstandes 20 des Arbeitsmediums 12 im Vorratstank 10 liegt. In Bezug auf die Druckleitung 40, die von der Fördereinheit 24 aus abzweigt, liegt der Siphonbogen 48 in der Saugleitung 30 bzw. zwischen erstem Saugleitungsabschnitt 36 und dem zweiten Saugleitungsabschnitt 38 in einer geodätischen Höhe 34.

Der Darstellung gemäß Figur 1 ist zu entnehmen, dass sowohl der erste Saugleitungsabschnitt 36 als auch der zweite Saugleitungsabschnitt 38 der Saugleitung 30 tankintern, d.h. innerhalb des Vorratstanks 10 verlaufen. Insbesondere ist die Saugleitung 30 bzw. deren Saugleitungsabschnitte 36 und 38 beheizbar, ebenso wie der Siphonbogen 48. Damit kann ein Druckausgleich für den Fall des Einfrierens des Arbeitsmediums 12 innerhalb des Vorratstanks 10 bei niedrigen Außentemperaturen erreicht werden. Das Arbeitsmedium 12 wird durch die Fördereinheit 24 über den Filter 26, dann über die Saugleitung 30, in der der Siphonbogen 48 ausgebildet ist, angesaugt und in die Druckleitung 40 gefördert. Beim Rücksaugen wird das flüssige Arbeitsmedium 12 aus der Druckleitung 40 durch die Fördereinheit 24 in die Saugleitung 30 bzw. deren Saugleitungsabschnitt 36 und 38 über den Siphonbogen 48 rückgesaugt und der Filter 26 wieder in den Vorratstank 10 zurückgefördert. Die Förderung erfolgt so lange, bis der Siphonbogen 48 bis zu seinem oberen geodätischen Punkt, d.h. bis zur maximalen geodätischen Höhe 34 sicher entleert ist.

Die beheizbare Saugleitung 30 gewährleistet einen Druckausgleich über einen sich durch die Beheizung einstellenden Spalt zwischen dem Außenmantel der Saugleitung 30, die sich in der Ausführungsvariante gemäß Figur 1 tankintern in Bezug auf den Vorratstank 10 erstreckt, und dem gefrorenen Arbeitsmedium 12, Harnstoff oder eine Harnstoff-Wasser-Lösung. Wird der Flüssigkeitspegel abgesenkt, so wird aus dem Spalt ein Luftspalt.

Figur 2 zeigt ein nicht erfindungsgemäßes Beispiel wobei sich die Saugleitung der Fördereinheit tankextern in Bezug auf den Vorratstank 10 erstreckt.

In der Variante gemäß Figur 2 verlaufen der erste Saugleitungsabschnitt 36 und der zweite Saugleitungsabschnitt 38 der Saugleitung 30 außerhalb der Tankwand 14 des Vorratstanks 10, d.h. erstrecken sich nicht durch das Arbeitsmedium 12, welches im Vorratstank 10 bevorratet ist.

Auch bei der in Figur 2 dargestellten Variante ist die Saugleitung 30 bzw. deren Saugleitungsabschnitt 36, 38 beheizbar. Das Arbeitsmedium 12 wird gemäß der Variante in Figur 2 durch die Fördereinheit 24 aus der Druckleitung 40 in die Saugleitung 30 rückgesaugt, über den Siphonbogen 48 und den Filter 26 zurück in den Vorratstank 10 gefördert. Die Förderung erfolgt so lange, bis der Siphonbogen 48 bis zu seiner oberen geodätischen Höhe 34 ausreichend entleert ist und sichergestellt ist, dass sich ein Abriss der Flüssigkeitssäule innerhalb der Saugleitung 30 ereignet hat. Eine Entlüftung des unteren Tankbereiches, insbesondere im Bereich der Absaugstelle, kann dadurch herbeigeführt werden, dass die außenliegend verlaufende Leitung - unerheblich, ob es eine Saug- oder Druckleitung mit Siphonbogen ist - direkt eng an der Wand des Tanks angebracht wird. Ein ausreichender Wärmeleitkoeffizient des eingesetzten Materials und die Beheizung dieser Leitung begünstigen die Entlüftung des unteren Tankbereichs, insbesondere des Bereiches, in dem die Absaugstelle liegt. Für diesen Fall kann durch die Tankwand hindurch eine ausreichende Wärmezufuhr eingestellt werden, so dass zumindest eine ausreichende Kapillare bzw. ein ausreichender Durchgang von Kavität zum entlüfteten Tankbereich möglich ist.

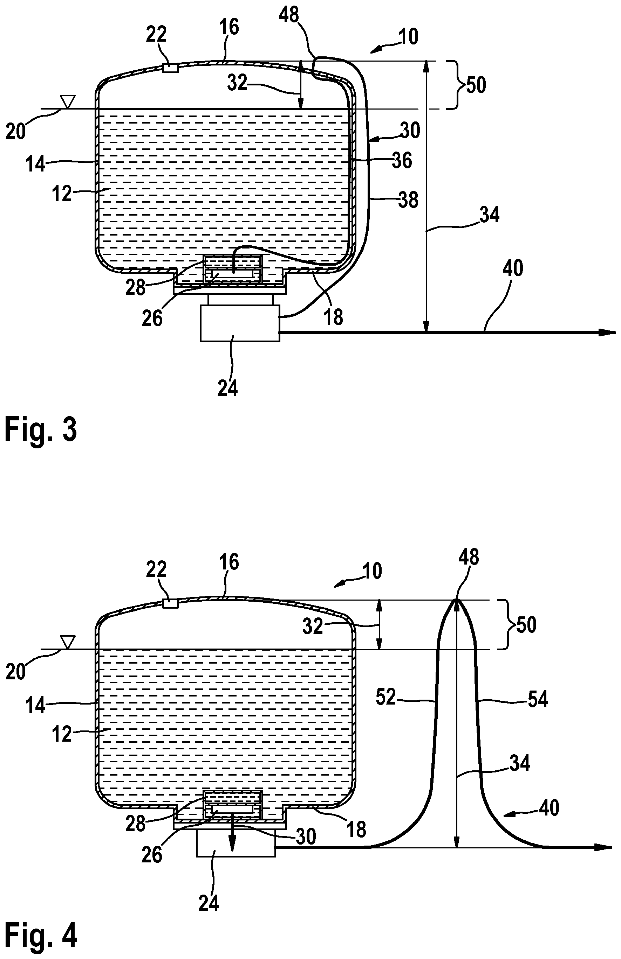

Figur 3 zeigt ein weiteres nicht erfindungsgemäßes Beispiel wobei der erste Saugleitungsabschnitt 36 innerhalb des Vorratstanks 10 und der weitere, zweite Saugleitungsabschnitt 38 außerhalb des Vorratstanks 10 verläuft.

Aus der Darstellung gemäß Figur 3 geht hervor, dass in dieser Variante der Siphonbogen 48 um die Höhendifferenz ΔH, vergleiche Bezugszeichen 32 in Figur 3, oberhalb des maximalen Füllstandes 20 des Arbeitsmediums 12 im Vorratstank 10 liegt. Im Unterschied zur Darstellung gemäß Figur 2 verläuft der erste Saugleitungsabschnitt 36 tankintern, vergleiche Bezugszeichen 44, durch das Arbeitsmedium 12, das im Vorratstank 10 bevorratet wird, während sich der zweite Saugleitungsabschnitt 38 der Saugleitung 30 außerhalb der Tankwand 14 des Vorratstanks 10 jenseits des Siphonbogens 48 zur Fördereinheit 24 erstreckt. Durch Bezugszeichen 50 ist ein Abrissbereich angedeutet, innerhalb dessen die Flüssigkeitssäule in der Saugleitung 30 bzw. zwischen dem ersten Saugleitungsabschnitt 36 vor dem Siphonbogen 48 und dem zweiten Saugleitungsabschnitt 38 nach dem Siphonbogen 48 abreißt. Der Vollständigkeit halber sei erwähnt, dass in der Variante gemäß Figur 3 der Vorratstank 12 durch den Tankdeckel 16, in dem eine Tankentlüftung 22 ausgebildet ist, verschlossen ist. Der Vorratstank 10 umfasst darüber hinaus den Tankboden 18, in dem das Filter 26 sowie ein Heizelement 28 angeordnet sind. Unterhalb des Filters 26 bzw. des Heizelementes 28 befindet sich die Fördereinheit 24, bei der es sich in der Regel um eine Pumpe handelt, die über die Saugleitung 30 bzw. den ersten Saugleitungsabschnitt 36 sowie den zweiten Saugleitungsabschnitt 38 das Arbeitsmedium 12 aus dem Vorratstank 10 ansaugt. Auch in der Variante gemäß Figur 3 ist zumindest der erste Saugleitungsabschnitt 36 der Saugleitung 30 beheizbar, so dass sich für den Fall eines gefrorenen Arbeitsmediums 12 innerhalb des Vorratstanks 10 ein Druckausgleich durch Anschmelzen des gefrorenen Arbeitsmediums 12 erreichen lässt. Bevorzugt sollte die Saugleitung stets komplett beheizbar sein, so dass bei laufendem Betrieb, z.B. bei auftretenden Temperaturstürzen, die Leitung nicht gefriert, was insbesondere bei Dosierpausen und sehr klein dosierten Mengen möglich sein kann. Über den sich aufgrund des Anschmelzens einstellenden Spaltes, der bei Absenkung des Flüssigkeitspegels zum Luftspalt wird, zwischen dem gefrorenen Arbeitsmedium 12 und der Mantelfläche des ersten Saugleitungsabschnittes 36 der Saugleitung 30, die tankintern, vergleiche Position 44, verläuft, lässt sich ein Druckausgleich erreichen.

Im Hinblick auf eine Neigung - im abgestellten Falle - des Fahrzeuges ist eine Durchführung der Saugleitung 30 bzw. des ersten Saugleitungsabschnittes 36 bei tankinternem Verlauf 42 so zu gestalten, dass die Saugleitung 30 bzw. die Saugleitungsabschnitte 36, 38 in Bezug auf den Tankdeckel 16 mittig durch diesen hindurchgeführt werden und dementsprechend abgedichtet sind.

Der Darstellung gemäß Figur 4 ist eine weitere Variante bei der der Siphonbogen anstelle in der Saugleitung in der Druckleitung, d.h. auf der Druckseite der Fördereinheit ausgebildet ist.

Aus der Darstellung gemäß Figur 4 lässt sich entnehmen, dass der Siphonbogen 48 in der Druckleitung 40 ausgebildet ist. Der Siphonbogen 48 liegt um eine geodätische Höhe 34 in Bezug auf die Austrittsseite der Fördereinheit 24. Wie aus der Darstellung gemäß Figur 4 des Weiteren hervorgeht, ist die Saugleitung 30 im Vergleich zu den vorhergehenden Varianten gemäß der Figuren 1, 2 und 3 zu einem kurzen Leitungsanschluss geworden, der sich von der Unterseite des Filters 26 zur Fördereinheit 24 erstreckt. Von der Fördereinheit 24 erstreckt sich seitlich die Druckleitung 40, in der in der maximalen geodätischen Höhe 34 der Siphonbogen 48 ausgebildet ist.

Der Vorratstank 10, in dem das gefrierfähige Arbeitsmedium 12 bevorratet ist, wird analog zu den Varianten gemäß der Figuren 1, 2 und 3 von der Tankwand 14 begrenzt und durch den Tankdeckel 16 abgeschlossen. Die Einbauten wie Filter 26, Heizungselement 28 sowie Fördereinheit 24 befinden sich allesamt unterhalb bzw. innerhalb des Tankbodens 18 des Vorratstanks 10 gemäß der in Figur 4 dargestellten Variante.

Der maximale Füllstand 20, den das Arbeitsmedium 12 innerhalb des Vorratstanks 10 einzunehmen vermag, ist durch Bezugszeichen 20 gekennzeichnet. Die Höhendifferenz ΔH, vergleiche Position 32, um welche der Siphonbogen 58 in der Druckleitung 40 erhöht liegt, entspricht im Wesentlichen dem Abrissbereich der Flüssigkeitssäule 50 innerhalb der Druckleitung 50 gemäß der in Figur 4 dargestellten Variante. Der Vollständigkeit halber sei erwähnt, dass in der in Figur 4 dargestellten Variante ebenfalls die Tankentlüftung 22 in den Tankdeckel 16 an der Oberseite des Vorratstanks 10 integriert ist. Aus der Darstellung gemäß Figur 4 geht hervor, dass die Druckleitung 40 mit darin ausgebildetem Siphonbogen 48 in der maximalen geodätischen Höhe 34 einen tankexternen Verlauf 46 annimmt. Gemäß Figur 4 ist nicht die Saugleitung 30, sondern die Druckleitung 40 beheizbar ausgebildet, um bei Einfrieren des Arbeitsmediums 12 die Druckleitung 40 wieder durchgängig zu machen. Das Arbeitsmedium 12 wird durch die Fördereinheit 24 über den Filter 26 und über die Saugleitung 30 angesaugt und in die Druckleitung 40, in der der Siphonbogen 48 ausgebildet ist, gefördert. Je nach konstruktiver Anbindung des Filters 26 kann auch auf die Saugleitung 30 als separates Bauteil - wie in Zusammenhang mit Figur 4 dargestellt - verzichtet werden.

Beim Rücksaugen des Arbeitsmediums 12 wird die Flüssigkeit aus der Druckleitung 40, in der der Siphonbogen 48 in der maximalen geodätischen Höhe 34 ausgebildet ist, durch die Fördereinheit 24 in die Saugleitung 30 und den Filter 26 wieder in das Innere des Vorratstanks 12 zurückgefördert. Die Förderung ist so lange sicherzustellen, bis der Siphonbogen 48 in der Druckleitung 40 bis zum oberen geodätischen Punkt, d.h. bis zur maximalen geodätischen Höhe 34 entleert ist.

Im Unterschied zu den in Figuren 1 bis 3 dargestellten Varianten können gemäß der Variante in Figur 4 die Fördereinheit 24 Teile der Druckleitung 40 mit dem Arbeitsmedium 12 geflutet werden. Dadurch stellt sich die Anforderung, dass die Fördereinheit 24 und die Druckleitung 40 an sich eisdruckfest ausgeführt werden müssen und den sich beim Gefrieren des Arbeitsmediums 12 einstellenden Volumenänderungen standhalten müssen. In Weiterbildung des zugrunde liegenden Gedankens besteht eine Möglichkeit, eine eisdruckfest ausgelegte Fördereinheit 24 mit einer nicht eisdruckfesten Dosiereinrichtung zu kombinieren und dadurch eine Saugleitung, die beheizt werden müsste, einzusparen. Selbst bei komplett eisdruckfest ausgelegten Systemen, d.h. eisdruckfester Fördereinheit 24, sowie eisdruckfester Druckleitung 40 und eisdruckfester Dosiereinrichtung kann es unter Umständen sinnvoll sein, das Systemteil rückzusaugen, damit eine Leckage im Abgasbereich sicher vermieden werden kann.

## Patentansprüche

1. Vorratstank (10) zur Aufnahme eines gefrierfähigen Arbeitsmediums (12) zur Abgasnachbehandlung selbstzündender Verbrennungskraftmaschinen mit einer Fördereinheit (24), einer Saugleitung (30, 36, 38) und einer Druckleitung (40, 52, 54), wobei in der Saugleitung (30, 36, 38) ein Siphonbogen (48) ausgebildet ist, der um eine Höhe ΔH (32) oberhalb eines maximalen Füllstandes (20) des Arbeitsmediums (12) im Vorratstank (10) liegt, wobei sowohl die Saugleitung (30, 36, 38) als auch die Druckleitung (40, 52, 54) beheizbar sind und eine maximale geodätische Höhe (34) des Siphonbogens (48) oberhalb des maximalen Füllstandes (20), d. h. des im Vorratstank (10) bevorrateten Arbeitsmediums (12) liegt, ein vor dem Siphonbogen (48) liegender erster Saugleitungsabschnitt (36) durch das Arbeitsmedium (12) im Inneren des Vorratstanks (10) verläuft, **dadurch gekennzeichnet, dass** die Fördereinheit (24) sich unterhalb des Tankbodens (18) des Vorratstanks (10) befindet und sich ein zweiter Saugleitungsabschnitt (38) stromab des Siphonbogens (48) durch das Arbeitsmedium (12), welches im Vorratstank (10) bevorratet ist, erstreckt.

2. Vorratstank (10) gemäß Anspruch 1, **dadurch gekennzeichnet, dass** eine Druck- bzw. Saugleitung (36, 38, 40) entlang der Tankwand (14) verläuft und aus einem Material gefertigt ist, welches eine optimale Wärmeübertragung gewährleistet.

## Claims

1. Storage tank (10) for accommodating a working medium (12), capable of freezing, for the exhaust-gas aftertreatment of auto-ignition internal combustion engines, with a delivery unit (24), with a suction line (30, 36,38) and with a pressure line (40, 52, 54), wherein formed in the suction line (30, 36, 38) is a siphon bend (48) which is above a maximum fill level (20) of the working medium (12) in the storage tank (10) by a height ΔH (32), wherein both the suction line (30, 36, 38) and the pressure line (40, 52, 54) are heatable and a maximum geodetic height (34) of the siphon bend (48) is above the maximum fill level (20), that is to say of the working medium (12) stored in the storage tank (10), a first suction line portion (36) situated before the siphon bend (48) running through the working medium (12) in the interior of the storage tank (10), **characterized in that** the delivery unit (24) is situated below the tank base (18) of the storage tank (10) and a second suction line portion (38) extends through the working medium (12), which is stored in the storage tank (10), downstream of the siphon bend (48).

2. Storage tank (10) according to Claim 1, **characterized in that** a pressure or suction line (36, 28, 40) runs along the tank wall (14) and is produced from a material which ensures an optimum transfer of heat.

## Revendications

1. Réservoir de stockage (10) destiné à contenir un fluide de travail congelable (12) pour le post-traitement de gaz d'échappement de moteurs à combustion interne à allumage spontané avec une unité de transport (24), une conduite d'aspiration (30, 36, 38) et une conduite de refoulement (40, 52, 54), dans lequel une courbe en siphon (48) est formée dans la conduite d'aspiration (30, 36, 38), laquelle est située à une hauteur ΔH (32) au-dessus d'un niveau de remplissage maximal (20) du fluide de travail (12) dans le réservoir de stockage (10), dans lequel aussi bien la conduite d'aspiration (30, 36, 38) que la conduite de refoulement (40, 52, 54) peuvent être chauffées et une hauteur géodésique maximale (34) de la courbe en siphon (48) est située au-dessus du niveau de remplissage maximal (20), en d'autres termes au-dessus du fluide de travail (12) stocké dans le réservoir de stockage (10), une première partie de conduite d'aspiration (36) située avant la courbe en siphon (48) s'étend à travers le fluide de travail (12) à l'intérieur du réservoir de stockage (10), **caractérisé en ce que** l'unité de transport (24) se trouve en dessous du fond de réservoir (18) du réservoir de stockage (10) et une deuxième partie de conduite d'aspiration (38) s'étend en aval de la courbe en siphon (48) à travers le fluide de travail (12), qui est stocké dans le réservoir de stockage (10).

2. Réservoir de stockage (10) selon la revendication 1, **caractérisé en ce qu'**une conduite de refoulement ou d'aspiration (36, 38, 40) s'étend le long de la paroi de réservoir (14) et est fabriquée en un matériau, qui garantit un transfert de chaleur optimal.
